# EUROPEAN PATENT APPLICATION

(11) **EP 4 578 763 A1**
(43) Date of publication of application: **02.07.2025**
(21) Application number: 24223408.6
(22) Date of filing: 27.12.2024
(51) Int. Cl.: B62D 15/02, G08G 1/01

(54) **AUTONOMOUS VALET PARKING SYSTEM AND METHOD FOR OPERATING THE SAME**

(30) Priority: 29.12.2023 KR 20230196675; 18.10.2024 KR 20240142795
(71) Applicant: Hyundai Motor Company, Seoul 06797 (KR); Kia Corporation, Seocho-gu Seoul 06797 (KR); Ajou University Industry-Academic Cooperation Foundation, Suwon-si, Gyeonggi-do 16499 (KR)
(72) Inventor: PARK, Se Young, 18280 Hwaseong-si, Gyeonggi-do (KR); MIN, Young Bin, 18280 Hwaseong-si, Gyeonggi-do (KR); SONG, Bong Sob, 16499 Suwon-si, Gyeonggi-do (KR)
(74) Representative: Viering, Jentschura & Partner mbB Patent- und Rechtsanwälte

(57) **Abstract**

One or more example embodiments relate to a vehicle and a method for performing autonomous valet parking. A vehicle may include at least one sensor configured to obtain image data indicating a surrounding environment of the vehicle; a controller configured to control at least one operation of the vehicle; a communication interface; and at least one processor. The at least one processor may be configured to: identify, based on the image data, a unique marker installed in a parking lot; set, based on the unique marker, position information of the vehicle; identify, based on the image data, a generic marker installed in the parking lot; adjust, based on the generic marker, the position information of the vehicle; and control, based on the adjusted position information of the vehicle, an autonomous parking operation of the vehicle.

## Description

### FIELD

The present disclosure relates to autonomous driving, and more particularly to autonomous parking.

### BACKGROUND

With an autonomous valet parking system, a driver of a vehicle may stop the vehicle in a vehicle drop-off area and get off the vehicle. The autonomous valet parking system may then be able to move the vehicle to an available (e.g., empty or unoccupied) parking space in a parking lot while the driver of the vehicle is not on board.

When the driver calls for the vehicle, the autonomous valet parking system may autonomously move the parked vehicle to a pick-up area (which may or may not be the same of the drop-off area), and allow the driver to take over the vehicle in the pick-up area.

The autonomous valet parking system may work in concert with vehicles capable of autonomous driving to park the vehicles in an available parking space.

In order for the autonomous valet parking system to control and allow the autonomous driving vehicle to travel to an empty parking space, the current position of the vehicle within the parking lot may need to be precisely identified. However, if location information is not available (e.g., a global positioning system (GPS) signal cannot reach the vehicle in a parking lot), it may be difficult to precisely pinpoint the position of the vehicle, for example, if the parking lot has multiple floors.

### SUMMARY

In order for the autonomous valet parking system to precisely guide the autonomous driving vehicle to a parking space, it is necessary to precisely figure out a position of the vehicle within a map of the parking lot.

One or more example embodiments of the present disclosure disclose a method for figuring out a precise position of a vehicle within a map of a parking lot, and a method for generating a digital map facilitating to figure out a precise position of the vehicle.

The technical problem to be achieved by the present disclosure is not limited to the above-mentioned technical problem, and other technical problems that are not mentioned will be clearly understood by ordinary-skilled persons in the art to which the present disclosure pertains from the following description.

According to one or more example embodiments of the present disclosure, a vehicle may include: at least one sensor configured to obtain image data indicating a surrounding environment of the vehicle; a controller configured to control at least one operation of the vehicle; a communication interface; and at least one processor. The at least one processor may be configured to: identify, based on the image data, a unique marker installed in a parking lot; set, based on the unique marker, position information of the vehicle; identify, based on the image data, a generic marker installed in the parking lot; adjust, based on the generic marker, the position information of the vehicle; and control, based on the adjusted position information of the vehicle, an autonomous parking operation of the vehicle.

The at least one processor may be configured to set the position information of the vehicle by: receiving, from a server via the communication interface, a digital map indicating a position of the unique marker and a position of the generic marker; and identifying a position of the vehicle based on the position of the unique marker as indicated in the digital map. The at least one processor may be configured to adjust the position information of the vehicle by: adjusting the position of the vehicle based on the position of the generic marker as indicated in the digital map.

The at least one processor may be further configured to: reset, based on the unique marker being identified, a path, of the vehicle, to a destination.

The digital map may include: a first layer that includes physical three-dimensional space information, a second layer that includes static information, a third layer that includes temporarily static information, a fourth layer that includes dynamic information, and a fifth layer that includes unknown dynamic information. The static information, of the second layer, may include information on the unique marker and the generic marker.

The at least one processor may be configured to identify the generic marker by: identifying, based on the image data, a sign provided in the parking lot.

The sign may include at least one of: a signboard mandated to be installed in the parking lot, a word or a symbol provided on a ground, a guidance board, or an advertisement board. The sign may be predetermined to be used as the generic marker.

The digital map may indicate that a characteristic and a position of a mapped sign that corresponds to the generic marker. The at least one processor may be configured to adjust the position information by: identifying, based on the image data, an observed sign in the parking lot; determining, based on the image data, a characteristic of the observed sign; determining, based on a comparison of the characteristic of the observed sign with the characteristic of the mapped sign, that the observed sign matches the mapped sign; and adjust the position information of the vehicle further based on the observed sign.

The characteristic of the observed sign may include at least one of: a type of sign, components of the sign, a color of the sign, or relative position information of the components of the sign.

The components may include at least one of a character or a symbol. The characteristic of the observed sign may include at least one of: character information, relative character position information, symbol information, or relative symbol position information.

At least one of the unique marker or the generic marker may include at least one white rectangle disposed in a black rectangular background. The unique marker may have a greater complexity than the generic marker.

According to one or more example embodiments of the present disclosure, an autonomous parking server may include: data storage configured to store a digital map; a communication interface for communication with a vehicle; and at least one processor. The at least one processor may be configured to: receive, from the vehicle, image data indicating a surrounding environment of the vehicle; identify, based on the image data, a unique marker installed in a parking lot; set, based on the unique marker, position information of the vehicle; identify, based on the image data, a generic marker installed in the parking lot; adjust, based on the generic marker, the position information of the vehicle; and cause, based on the adjusted position information of the vehicle, the vehicle to perform an autonomous parking operation.

The at least one processor may be configured to set the position information of the vehicle by: transmitting, to the vehicle via the communication interface, the digital map. The digital map may indicate a position of the unique marker and a position of the generic marker; and identifying a position of the vehicle based on the position of the unique marker as indicated in the digital map. The at least one processor may be configured to adjust the position information of the vehicle by: adjusting the position of the vehicle based on the position of the generic marker as indicated in the digital map.

The at least one processor may be further configured to: reset, based on the unique marker being identified, a path, of the vehicle, to a destination.

The digital map may include: a first layer that includes physical three-dimensional space information, a second layer that includes static information, a third layer that includes temporarily static information, a fourth layer that includes dynamic information, and a fifth layer that includes unknown dynamic information. The static information, of the second layer, may include information on the unique marker and the generic marker.

The at least one processor may be further configured to: identify, based on the image data, a sign provided in the parking lot and used as the generic marker, and adjust the position information of the vehicle.

According to one or more example embodiments of the present disclosure, a method performed by an apparatus of a vehicle may include: receiving, from at least one sensor of the vehicle, image data indicating a surrounding environment of the vehicle; identifying, based on the image data, a unique marker installed in a parking lot; setting, based on the unique marker, position information of the vehicle; identifying, based on the image data, a generic marker installed in the parking lot; adjusting, based on the generic marker, the position information of the vehicle; and controlling, based on the adjusted position information of the vehicle, an autonomous parking operation of the vehicle.

Setting the position information may include: receiving, from a server via a communication interface of the vehicle, a digital map indicating a position of the unique marker and a position of the generic marker; and identifying a position of the vehicle based on the position of the unique marker as indicated in the digital map. Adjusting the position information may include: adjusting the position of the vehicle based on the position of the generic marker as indicated in the digital map.

The method may further include: resetting, based on the unique marker being identified, a path, of the vehicle, to a destination.

Identifying the generic marker may include: identifying, based on the image data, a sign provided in the parking lot.

The sign may include at least one of: a signboard mandated to be installed in the parking lot, a word or a symbol provided on a ground, a guidance board, or an advertisement board. The sign may be predetermined to be used as the generic marker.

### BRIEF DESCRIPTION OF THE DRAWINGS

FIG. 1 shows an autonomous valet parking system.
FIG. 2 is a block diagram of a vehicle and an autonomous valet parking server.
FIG. 3 is a conceptual diagram for describing an autonomous valet parking system and a method for operating the same.
FIG. 4 is a view illustrating an example of installing a marker in a parking lot.
FIG. 5 is a view illustrating examples of a unique marker and a generic marker.
FIG. 6 is a view illustrating examples of signs, words or a symbol provided on a ground, a guidance board, or an advertisement board which may be seen in a parking lot.
FIG. 7 is a view illustrating a system generating a digital map which includes a unique sign of a parking lot as a generic marker.
FIG. 8 is a view illustrating a method for generating a digital map which includes a unique sign of a parking lot as a generic marker.
FIG. 9 is an example configuration of a digital map configured with five layers.
FIG. 10 is an example of recognizing position information of a vehicle by using a unique sign and a generic marker together.
FIG. 11 is an example illustrating a case of which a sign is changed.

### DETAILED DESCRIPTION

Hereinafter, one or more example embodiments of the present disclosure will be described in further detail with reference to the accompanying drawings.

The configuration and advantages of the present disclosure will be more apparent from the following detailed description. Wherever possible, the same reference numerals will be used throughout the drawings to refer to the same elements even if shown in another drawing. It will be paid attention that detailed description of known arts will be omitted if it is determined that the arts can mislead the present disclosure.

Before describing the present disclosure in detail, terms being used in the present disclosure may be defined as below.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

Based on one or more features (e.g., identifying unique and/or generic markers installed in a parking lot) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., identifying unique and/or generic markers installed in a parking lot) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., identifying unique and/or generic markers installed in a parking lot) described herein.

Minimum risk maneuver (MRM) operation(s) may also be controlled, for example, based on one or more features (e.g., identifying unique and/or generic markers installed in a parking lot) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., identifying unique and/or generic markers installed in a parking lot) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane.

The driving control apparatus may identify a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., identifying unique and/or generic markers installed in a parking lot) described herein.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.). An operation control for autonomous driving of the vehicle may include autonomous parking, and more specifically, moving or guiding the vehicle to an available parking space and parking the vehicle in the available parking space.

The vehicle is equipped with an Autonomous Driving System (ADS) and is a vehicle capable of autonomous driving. For example, by the ADS, the vehicle may perform at least one among steering, acceleration, deceleration, lane change, and stopping (or short stop) without a driver's manipulation. For example, the ADS may include at least one among Pedestrian Detection and Collision Mitigation System (PDCMS), Lane Change Decision Aid System (LCDAS), Land Departure Warning System (LDWS), Adaptive Cruise Control (ACC), Lane Keeping Assistance System (LKAS), Road Boundary Departure Prevention System (RBDPS), Curve Speed Warning System (CSWS), Forward Vehicle Collision Warning System (FVCWS), and Low Speed Following (LSF).

A driver is a human being who uses a vehicle, and is provided with a service of an autonomous driving system.

The vehicle control authority is an authority to control at least one component of the vehicle and/or at least one function of the vehicle. At least one function of the vehicle may include, for example, at least one among steering, acceleration, deceleration (or braking), lane change, lane detection, lateral control, obstacle recognition and distance detection, powertrain control, safe area detection, engine on/off, power on/off, and vehicle lock/unlock. The listed functions of the vehicle are merely examples for helping understanding, and the present disclosure is not limited thereto.

The vehicle has a function of performing autonomous valet parking.

An autonomous valet parking server may monitor vehicles present in a parking facility, determine a guide route to move a vehicle to a target position in a parking space, determine a permitted driving area, instruct autonomous driving of a vehicle by transmitting a control command to the vehicle, and transmit an emergency stop command in case of emergency so as to stop the vehicle.

The infrastructure may be a parking facility, and may be sensors disposed in the parking facility. In addition, the infrastructure may include a parking gate, and the infrastructure may be a concept which includes an autonomous valet parking server.

A target position may refer to a parking space in which a space to park a vehicle is empty. In addition, the target position may refer to an area in which the driver gets on the vehicle in a situation in which the vehicle exits the parking lot, that is, a pick-up area.

The guide route may refer to a route by which the vehicle passes so as to reach the target position. For example, in a situation in which parking is performed, it is a route from the drop-off area to an empty parking space. For example, the guide route may take the form of `going forward by 50m', `turning to the left at a corner', and the like.

A driving route may refer to a route along which the vehicle follows.

The permitted driving area may refer to an area in which driving is permitted in the parking lot, such as the driving route. The permitted driving area may be defined with a partition wall, parked vehicles, and parking lines.

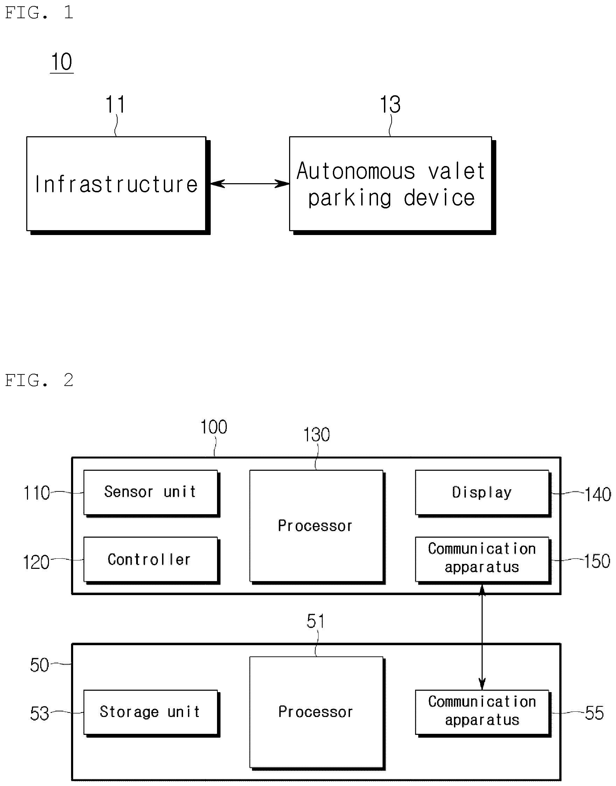

FIG. 1 shows an autonomous valet parking system.

Referring to FIG. 1, the autonomous valet parking system 10 may include an infrastructure 11, and an autonomous valet parking device 13.

The infrastructure 11 may mean a device or a system for operating, managing, and performing the autonomous valet parking system 10. For example, the infrastructure 11 may be a parking facility. The infrastructure 11 may include sensors, a communication apparatus, an alarm, a display device, and a server configured to control the device and apparatus. In addition, the infrastructure 11 may include a parking gate, and an autonomous valet parking server configured to control a vehicle.

The autonomous valet parking device 13 may mean a vehicle which performs the autonomous valet parking. The autonomous valet device 13 may mean a component or a group of components included in a vehicle capable of performing the autonomous valet parking.

FIG. 2 is a block diagram of a vehicle and an autonomous valet parking server.

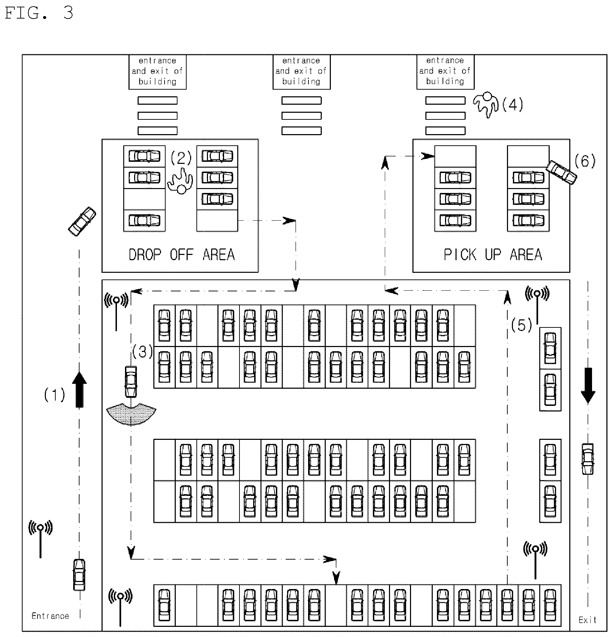

FIG. 3 shows an example configuration of the vehicle, and each component of this example configuration may be configured as one chip, one component, or one electronic circuit, or a combination of chips, components, and/or electronic circuits. Some of the components illustrated in FIG. 2 may be divided into a plurality of components and configured as different chips, different components, or different electronic circuits, and some components may be combined to form one chip, one component, or one electronic circuit. Some of the components illustrated in FIG. 2 may be omitted or other components not illustrated may be added. At least some of the components of FIG. 2 will be described with reference to subsequent drawings.

Referring to FIG. 2, an autonomous valet parking server 50 may include a processor 51, a storage unit (also referred to as storage or data storage) 53, and a communication apparatus (also referred to as communication interface) 55.

The storage unit 53 may store a digital map of a parking lot in which the autonomous valet parking is possible.

In addition, the storage unit 53 may statically or temporarily store all information necessary for the autonomous valet parking including information on vehicles parked in the parking lot, and components of the infrastructure. The information may be stored as information included in the digital map. For example, the digital map may indicate position(s) of unique and generic marker(s) installed in the parking lot.

The processor 51 may control the autonomous valet parking of the vehicle. The processor 51 may generate all control signals for the vehicle configured to perform the autonomous valet parking, and transmit the control signals to the vehicle 100 through the communication apparatus 55 to control the vehicle 100 such that the autonomous driving can be performed. In this case, all information for the autonomous valet parking is provided in the autonomous valet parking server, and on behalf of the processor 130 of the vehicle 100, the processor 51 of the autonomous valet parking server may generate a control command to be provided to the controller 120 and transmit the control command to the controller 120.

The autonomous valet parking server may instruct the vehicle 100 to perform the autonomous valet parking by itself. In this case, the processor 51 of the autonomous valet parking server may provide the vehicle with a digital map related to a parking lot, a target position at which the vehicle 100 must park, and a guide route information along which the vehicle 100 must travel for parking. The vehicle 100 may receive the above-mentioned information from the autonomous valet parking server, and perform the autonomous valet parking by autonomously traveling by itself.

Referring to FIG. 2, the vehicle 100 may include a sensor unit (also referred to as a sensor or one more sensors) 110, a controller 120, a processor 130, a display 140, and a communication apparatus (also referred to as a communication interface) 150.

The sensor unit 110 may sense an environment around the vehicle 100 using at least one sensor and generate data related to the surrounding environment of the vehicle 100 based on the sensing result. For example, the sensor unit 110 may obtain information on objects around the vehicle (e.g., other vehicles, people, objects, kerbs, guardrails, lanes, obstacles) based on the sensing data obtained from at least one sensor. The information on objects around the vehicle may include at least one among a position of the object, a size of the object, a shape of the object, a distance to the object, and a relative speed to the object. As another example, the sensor unit 111 may measure a position of the vehicle 110 using at least one sensor. For example, the sensor unit 111 may include at least one among a camera, a light detection and ranging (LIDAR) sensor, a radio detection and ranging sensor (a radar), an ultrasonic sensor, an infrared sensor, and a position measurement sensor. The listed sensors are merely examples for helping understanding, and the sensors included in the sensor unit 111 of the present disclosure are not limited thereto.

A camera may generate image data which includes an object positioned in front, at a rear and on a side of the vehicle 100, by capturing image around the vehicle. The lidar may generate information on an object positioned in front, on a rear side and/or on a side of the vehicle 100 using light (or laser). The radar may generate information on an object positioned in front, on a rear side and/or on a side of the vehicle 100 using electromagnetic waves (or radio waves). The ultrasonic sensor may generate information on an object positioned in front, on a rear side and/or on a side of the vehicle 100 using ultrasonic waves. The infrared sensor may generate information on an object positioned in front, on a rear side and/or on a side of the vehicle 100 using infrared rays.

The position measurement sensor may measure the current position of the vehicle 100. The position measurement sensor may include at least one among a Global Positioning System (GPS) sensor, a Differential Global Positioning System (DGPS) sensor and a Global Navigation Satellite System (GNSS) sensor. The position measurement sensor may generate position data of the vehicle based on a signal generated by at least one among a GPS sensor, DGPS sensor and GNSS sensor.

The controller 120 may control operation of at least one component of the vehicle 100 and/or at least one function of the vehicle according to the control of the processor 130. The at least one function may be, for example, at least one among a steering function, an acceleration function (or a longitudinal acceleration function), a deceleration function (or a longitudinal deceleration function, a brake function), a lane change function, a lane detection function, an obstacle recognition and a distance detection function, a lateral control function, a powertrain control function, a safety zone detection function, an engine on/off, a power on/off, and a vehicle lock/unlock function.

The controller 120 may control at least one component of the vehicle and/or at least one function of the vehicle for autonomous driving of the vehicle 100 according to the control of the processor 130. For example, for the autonomous driving, the controller 120 may control the operation of at least one function among a steering function, an acceleration function, a deceleration function, a lane change function, a lane detection function, a lateral control function, an obstacle recognition and distance detection function, a powertrain control function, and a safe zone detection function.

The display 140 may visually display information related to the vehicle 100. For example, the display 140 may provide various information related to the state of the vehicle 100 to the driver of the vehicle 100 under the control of the processor 130. The various information related to the state of the vehicle may include at least one among information representing whether various components included in the vehicle and/or at least one function of the vehicle are normally operated, and information representing the driving state of the vehicle. However, in case of performing the autonomous valet parking without the driver, the display 140 may be in an off-state in which information is not displayed.

The communication apparatus 150 may send or receive data with the infrastructure 11. The communication may be referred to as a vehicle-to-infrastructure (V2I) communication. In addition, the communication apparatus 150 may send or receive data with the other vehicle. The communication may be referred to as a vehicle-to-vehicle (V2V) communication. In addition, the V2I communication and the V2V communication may be collectively referred to as a vehicle-to-everything (V2X) communication. The communication apparatus 150 may receive data transmitted from the infrastructure 11 (for example, a target position, a guide route, or a command etc.), and process the received data and send the processed data to the processor 130. In addition, the communication apparatus 150 may transmit data generated by the vehicle 100 to the infrastructure 11. The communication apparatus 150 may send or receive data with a terminal of the driver of the vehicle 100.

The communication apparatus 150 may receive or send data by using a wireless communication protocol or a wired communication protocol. Examples of a wireless communication protocol may include wireless LAN (WLAN), digital living network alliance (DLNA), wireless broadband (Wibro), world interoperability for microwave access (Wimax), global system for mobile communication (GSM), code division multi access (CDMA), code division multi access 2000 (CDMA2000), enhanced voice-data optimized or enhanced voice-data only (EV-DO), wideband CDMA (WCDMA), high speed downlink packet access (HSDPA), high speed uplink packet access (HSUPA), IEEE 802.16, long term evolution (LTE), long term evolution-advanced (LTE-A), wireless mobile broadband service (WMBS), Bluetooth, radio frequency identification (RFID), infrared data association (IrDA), Ultra-Wideband (UWB), Zigbee, near field communication (NFC), ultra sound communication (USC), visible light communication (VLC), Wi-Fi, and Wi-Fi Direct. In addition, examples of the wired communication protocol may include wired local area network (LAN), wired wide area network (WAN), power line communication (PLC), USB communication, Ethernet, serial communication, an optical/coaxial cable, and the like, but are not limited thereto, and any and all protocol which can provide an environment for communication with the other devices may be included.

The processor 130 may control the overall operation of the vehicle 100. The processor 130 may include an electrical control unit (ECU) capable of integrally controlling components in the vehicle 100. For example, the processor 130 may include a central processing unit (CPU) or a micro processing unit (MCU) capable of performing arithmetic processing.

The processor 130 may control the controller 120 based on the data received through the sensor unit 110 and the communication apparatus 150. The processor 130 may generate a control signal for controlling the vehicle 100 according to the data received from the infrastructure 11, and send the generated control signal to the controller 120.

The processor 130 may mean a device capable of controlling the vehicle 100, and performing a series of operations or determinations for performing the autonomous valet parking. For example, the processor 130 may be a part of the autonomous valet parking device 13 in which programs including instructions for performing the autonomous valet parking is executed.

As a part of the autonomous valet parking device 13, the processor 130 may control the autonomous driving such that the vehicle 100 can be parked at a target position (e.g., a target location) in the parking lot in cooperation with the infrastructure 11. The processor 130 may provide the controller 120 with a command so that the controller 120 can perform the autonomous driving.

The processor 130 may control the vehicle to be moved according to the guide route based on guide route information received from the infrastructure 11.

In the above-described FIG. 2, the controller 120 and the processor 130 have been described as each separate component, however, the controller 120 and the processor 130 may be integrated into one component.

FIG. 3 is a conceptual diagram for describing the autonomous valet parking system and a method for operating the same.

Referring to FIG. 3, at a position (1), the driver may drive the vehicle 100 to enter the parking lot, and move the vehicle to the drop-off area.

At a position (2), the driver may park the vehicle in the drop-off area, get off the vehicle, and deliver the vehicle driving authority to the infrastructure.

At a position (3), the infrastructure 11, or the autonomous valet parking server included in the infrastructure 11 searches an empty parking space among a plurality of parking spaces present in the parking lot, and determines a proper parking space (a target position) for the vehicle to be parked. In addition, the infrastructure 11 determines the guide route to the determined target position. When the target position and the guide route are determined, the vehicle 100 travels according the guide route autonomously or according to the control of the infrastructure 11, and performs the autonomous valet parking at the target position after reaching around the target position.

At a position (4), the driver determines the vehicle to exit the parking lot and moves to the pick-up area.

At a position (5), the infrastructure 11 or the autonomous valet parking server included in the infrastructure 11 may determine a proper target position. For example, the proper target position may be an empty parking space among a plurality of parking spaces present in the pick-up area. In addition, the infrastructure 11 or the autonomous valet parking server may determine the guide route to the determined target position. When the target position and the guide route are determined, the vehicle 100 travels along the guide route according to the control of the infrastructure 11 or autonomously, and performs the autonomous valet parking to park at the target position after reaching around the target position.

At a position (6), the driver reaches the pick-up area, receives the vehicle driving authority for the vehicle 100 back from the infrastructure 11, and drives the vehicle to move to the exit of the parking lot.

As illustrated in FIG. 3, the vehicle 100 or the infrastructure 11 must have a map of the parking lot so as to travel along the guide route according to the control of the infrastructure 11 or autonomously, and must identify a position of the vehicle 100 in the map, and recognize whether the vehicle 11 travels accurately along the guide route. To this end, the vehicle 100 needs to capture the surroundings using the sensor such as a camera, and to recognize its position based on the captured image.

A marker may be used. The marker may be a physical sign which allows to identify a unique identification (ID), which can be detected by the vehicle 100 and is installed in the parking lot, so as to support the position verification of the vehicle 100.

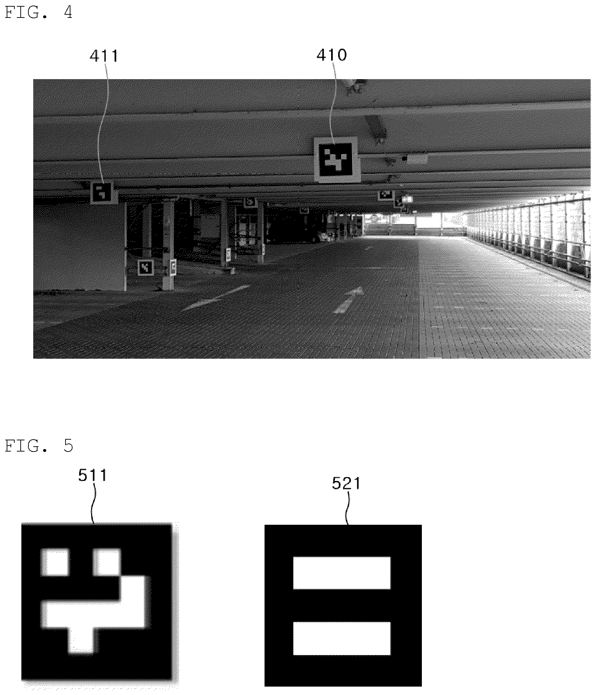

FIG. 4 is a view illustrating an example of installing a marker in a parking lot, and FIG. 5 is a view illustrating examples of a unique marker and a generic marker.

As illustrated in FIG. 4, it is possible to identify an accurate position in the parking lot by installing markers 410 and 411, which include unique IDs, at certain positions which can be detected by the vehicle 100, and allowing the vehicle 100 to recognize the marker and to extract (e.g., decipher or recognize) the unique ID so as to figure out a position corresponding to the unique ID in the digital map.

As illustrated in FIGS. 4 and 5, the marker may have a square shape, and the marker may have black and white rectangles. For example, the marker may indicate various shapes with a white rectangle disposed in the black rectangular (e.g., square) background so as to indicate the unique identification.

In this case, the marker may have two kinds including a unique marker and a generic marker.

The unique marker may be a physical sign, which allows to identify one among a range of unique IDs, for example, from 1 to 250. For each value in the range (e.g., 1 to 250), there may exist only one unique ID that corresponds to that value in the parking lot. Therefore, a vehicle which identifies the unique marker may figure out a position accurately in the digital map, which corresponds to the unique ID. In addition, the unique marker must be installed at a determined position according to laws or regulations of standards, for example, at an entrance for the vehicle to enter the parking lot from a drop-off area, or an exit for the vehicle to advance into a pick-up area from the parking lot. In this case, a unique ID, which is marked in the unique marker, may be set in advance.

A size of the unique marker may be determined according to regulations, and a display manner to display a unique ID in the unique marker may be determined in advance.

For the unique marker, a marker having a certain shape or a design drawn therein must be used and installed at a certain position (for example, an entrance and an exit). Therefore, it is difficult to install the unique marker freely, and as illustrated in FIG. 4, installation of a plurality of unique markers may make the parking lot be unsightly.

If using the generic marker, the above-described limitation of the unique marker may not be applied. A generic marker (also referred to as an anonymous marker) may have a non-unique or duplicate ID (e.g., one ID among 251 to 255), and the complexity in displaying the corresponding ID may be different from that of the unique marker. Displaying to show the ID in the generic marker may be simpler than that of the unique marker. Referring to FIG. 5, the unique marker 511 may be designed to be more complex (e.g., having more geometric shapes) than the generic marker 521 so as to express the ID.

In addition, the generic marker may be installed at a random position as needed. That is, unlike the unique marker, the generic marker may be installed randomly in consideration of a size and a structure of each parking lot. For example, in a big parking lot, a plurality of generic markers may be installed between unique markers to correct (e.g., adjust) position errors of the vehicle. That is, using a first unique marker, it is possible to figure out an accurate current position of the vehicle, however, while the vehicle moves from a position of the first unique marker to a second unique marker, it may be difficult to trace a position of the vehicle with an absolute accuracy (e.g., with a margin of error within 50 centimeter). In such a case, by using a plurality of generic markers, it may be possible to raise or improve the accuracy of the position of the vehicle. The generic marker may be used to assist the unique marker for accurately identifying the vehicle position. The vehicle may recognize the unique marker, and set position information of the vehicle as a position which corresponds to the unique marker. In addition, the vehicle may recognize the generic marker, and may correct (e.g., adjust) the position information of the vehicle, using position information which corresponds to the generic marker.

Accordingly, when the vehicle recognizes the unique marker, the vehicle may reset the current position of the vehicle with a position corresponding to the unique marker, and may additionally reset a path to a destination (e.g., parking space). When the resetting of the path is not needed, the vehicle may maintain and proceed with the existing path. When the vehicle recognizes the generic marker, the vehicle may reset (correct) the current position of the vehicle as a position corresponding to the generic marker, however, reset of the path may be impossible. When the current position of the vehicle which has been recognized through the generic marker is recognized to stray noticeably from the existing path, the vehicle may handle the information recognized through the corresponding generic marker as an error, and may not reset the path.

However, as illustrated in FIG. 5, the unique marker 511 and the generic marker 521 must be coded to include ID information such as a QR code, and installed at a certain position. That is, the markers 511 and 521 must be manufactured and installed in a way to perform a unique function of a marker.

Based on such backgrounds, the present disclosure proposes to use signs which are already installed in the parking lot, such as signs mandated to be installed in the parking lot, words or a symbol provided on a ground, a guidance board, or an advertisement board, as markers.

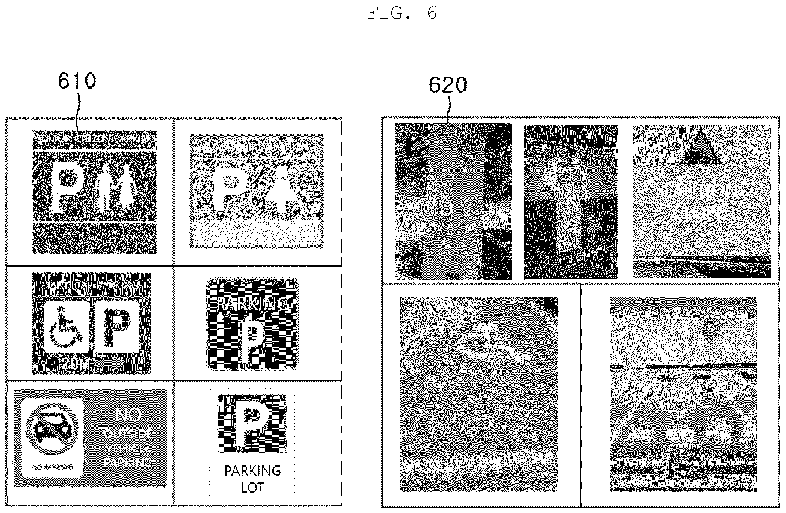

FIG. 6 is a view illustrating examples of signs, words or a symbol provided on a ground, a guidance board, or an advertisement board which may be seen in a parking lot.

As illustrated in FIG. 6, various signs may be provided in the parking lot. In addition, each sign includes a different symbol and character, and is sufficiently distinguishable. As such, by obtaining and distinguishing signs which are already provided in the parking lot, it is possible to use them as the generic marker for positioning. In this case, in the signs which are set for positioning, IDs for the generic marker may be specified.

When using the signs already provided in the parking lot as the generic markers, it is necessary to determine characteristics for distinguishing a first sign and a second sign, replacing the generic markers, from each other, and a position of the first sign in the digital map of the parking lot in advance, and to input the characteristics and the position in the digital map.

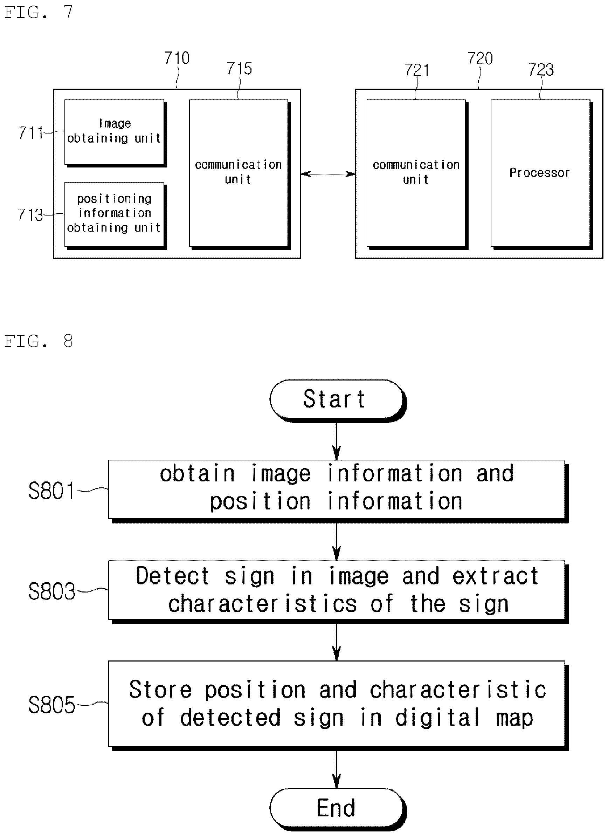

FIG. 7 is a view illustrating a system generating a digital map which includes a unique sign of a parking lot as a generic marker, and FIG. 8 is a view illustrating a method for generating a digital map which includes a unique sign of a parking lot as a generic marker.

Referring to FIGS. 7 and 8, a sign obtaining device 710 may include an image obtaining unit (also referred to as a visual sensor or a camera) 711, a positioning information obtaining unit (also referred to as location sensor) 713, and a communication unit (also referred to as a communication interface) 715. A digital map generating device (also referred to as a digital map or a digital map database) 720 may include a communication unit (also referred to as a communication interface) 721 and a processor 723.

The sign obtaining device 710 may be a vehicle, or a device which is temporarily provided in the vehicle and uses sensors attached to the vehicle. The sign obtaining device 710 may be an autonomous driving robot, which differs from the vehicle, or may be a smart device such as a smart mobile phone which is carried and moved by an operator.

The digital map generating device 720 may be the autonomous valet parking server, but may be a different device from the autonomous valet parking server. The digital map generating device 720 may be the autonomous valet parking server, or a computer program executable in a general computing device.

Referring to FIGS. 7 and 8, in an operation S801, the sign obtaining device 710 may obtain images inside the parking lot using the image obtaining unit 711, and at the same time, the positioning information obtaining unit 713 may obtain position information of positions at which each image is obtained. The image obtaining unit 711 may be a camera provided in the vehicle or in a mobile phone, and the positioning information obtaining unit 713 may be a GPS system, however, the positioning information obtaining unit 713 may be a separate positioning measuring device capable of accurately measuring a position at which a sign is provided using a facility provided for precise positioning.

The sign obtaining device 710 may send the obtained image information and the positioning information to the digital map generating device 720 through the communication unit 715.

In an operation S803, the digital map generating device 720 may detect signs from the image information received through the communication unit 721 and extract characteristics of each sign. The digital map generating device 720 may recognize a sign, a guidance board, words, or symbols shown in some of the image or in the entire image and detect signs.

The sign may include symbolic information such as the symbols for the disabled shown in the signs and on the ground, an identification number marked on a wall or a column for identifying a parked surface, notices in various shapes and containing various contents, and the like.

The digital map generating device 720 may detect signs and then, extract characteristics corresponding to each sign. In this case, characteristics corresponding to each sign may include types of signs, components contained in the signs, colors included in the signs, and relative position information of the components of the sign from one another, but are not limited thereto. In this case, the components may include Korean characters, English characters, symbols, and the like.

The digital map generating device 720 may extract at least one characteristic among characteristics related to information and a position of an English character, information and a position of a Korean character, and information and a position of a symbol, each of which are included in each symbol.

When taking an example of a sign 610 in FIG. 6, the digital map generating device 720 may detect the sign 610 from the image, and may extract information and a position of a character (e.g., a Korean character) and information and a position of a symbol from the detected sign 610. The digital map generating device 720 may extract a characteristic of which words "Elderly First Parking Section" are provided on an upper end of the sign 610, from the sign 610. In addition, the digital map generating device 720 may extract a characteristic that a symbol 'P' and a symbol indicating the elderly are provided side by side on a center of the symbol 610 in a big size.

When taking an example of an identification number 620 of the parking surface in FIG. 6, the digital map generating device 720 may detect the identification number 620 of a parked surface from the image and obtain information and a position of an English character from the detected identification number 620 of the parked surface. The digital map generating device 720 may extract the identification number of the parked surface, which are "C3""MF", from the image, and extract information that "C3" and "MF" are positioned vertically parallel to each other. In addition, a characteristic that "C3" is provided in a bigger size than that of "MF" may be extracted as well.

The above-described detection of the sign, and characteristics extraction of each sign may be performed based on the artificial intelligence.

Referring to FIGS. 7 and 8 again, in an operation S805, the digital map generating device 720 may correlate positions of signs detected in each image in the digital map and characteristics of the signs based on positioning information of each image obtained from the sign obtaining device 710 through the communication unit 721, and incorporate them into the digital map. The digital map generating device 720 may indicate a symbol representing the detected sign at a position corresponding to the positioning information in the digital map. In addition, the digital map generating device 720 may incorporate, into the digital map, the information of which a position corresponding to the positioning information in the digital map and characteristics of the detected signs are matched to each other.

Position information based on the signs may be used additionally in the digital map. Existing parking lots may already have unique markers or generic markers to inform position information installed therein, and the digital map may have the markers and position information correlated with each other stored therein. For example, the digital map may indicate that a characteristic of a sign and/or a position sign correspond to a generic marker. Therefore, the vehicle may obtain position information of the vehicle based on the marker. However, due to the limiting conditions in installing the markers, markers may not be installed in every needed position inside the parking lot. Or, it may be difficult to identify precise positions required by the standards or laws and regulations with only the markers present at the moment. In such a case, it is possible to replace the signs at the needed positions with the markers, or raise the accuracy of the position information by using the signs.

As described above, the marker information may be incorporated into the digital map. For the autonomous valet parking system, the digital map must include not only concrete information of the actual static structural information of the parking lot for positioning and navigation etc., but also additional information for performing various missions such as enter and exit of the vehicle, rearrangement, and the like.

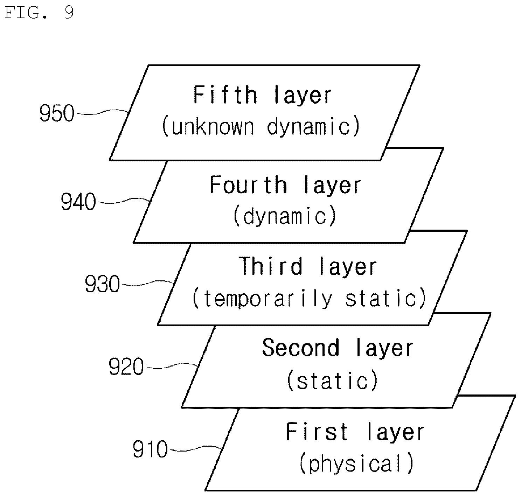

As such, in order to make the digital map include various information, the digital map of the present disclosure may be configured with five layers as illustrated in FIG. 9.

A first layer 910 of the digital map may include a physical three-dimensional space information. In addition, the first layer 910 includes information, through which whether the autonomous valet parking service can be provided for various vehicles can be checked. For example, in case of a parking lot constructed to have a plurality of stories, height information of each story may be included in the first layer 910, and the first layer 910 may provide information for determining whether the vehicle can be parked in the parking lot based on the height. In addition, the first layer may include size information of the parking space of the parking lot, and may provide information for determining whether the vehicle cannot be parked in a certain parking space and can be parked in another certain parking space only.

A second layer 920 in the digital map may include static information. The second layer 920 may define a role of each space inside the parking lot. For example, the second layer 920 may set each area such as the drop-off area, the pick-up area, and the parking area, and a role of each area may have been defined. After the markers are installed, or if the signs are set to be used as the markers, the second layer 920 may include information of the corresponding marker or sign. For example, in case of the marker, information of an ID represented and positions of each marker may be included in the second layer 920. In case of the sign, characteristics from which the sign can be distinguished from the other, and position information of the corresponding sign may be included in the second layer 920.

A third layer 930 of the digital map may include temporarily static information. For example, the third layer 930 may include information representing whether the vehicle is parked in a certain parking space, therefore, the information may be used to check an available parking space.

A fourth layer 940 of the digital map may include dynamic information. For example, the fourth layer 940 may include information representing the maximum velocity and real-time movement of the vehicle performing enter and exit, and rearrangement. In case of a parking lot where enter and exit of a pedestrian is permitted, information of the pedestrian movement may be included in the fourth layer 940.

A fifth layer 950 of the digital map may include unknown dynamic information. For example, in a parking lot in which human intrusion is impossible in its design, if there is a movement of a pedestrian or an electric scooter, the corresponding movement information may be included in the fifth layer 950 as unknown dynamic information. In addition, the fifth layer 950 may include an unknown object (a box, a timber, fallen from a vehicle) which is not previously installed but is temporarily detected due to a certain reason.

Unlike a conventional map being used simply for the purpose of providing a guide route for the autonomous driving vehicle, a digital map used in the parking lot may include the entire information in a parking lot. Such a digital map may be actively updated, and may be used by the autonomous valet parking server.

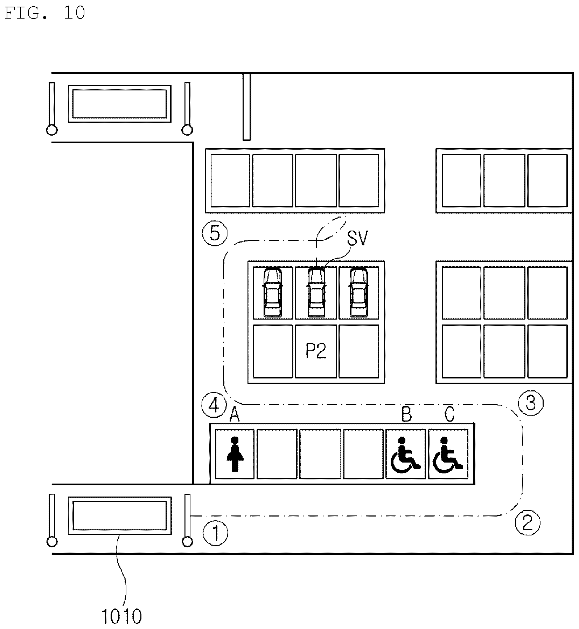

FIG. 10 is an example of recognizing position information of a vehicle by using the unique marker and the generic marker together.

Referring to FIG. 10, there may be a plurality of unique markers including five markers, which are marked as ①, ②, ③, ④, and ⑤ inside the parking lot. In addition, the sign obtaining device 710 and the digital map generating device 720 may detect signs A, B, and C in the parking lot, and may store the sign information in the digital map by correlating the signs to the position information.

If a unique marker or a generic marker exists nearby, or another sign is registered nearby when adding a sign in the digital map, the digital map generating device 720 may not add the corresponding sign. For example, a sign A in FIG. 10 is disposed at a position similar to the marker (4), and the sign A may not be necessary in obtaining the position information of the vehicle. Therefore, the digital map generating device 720 may not include the position information of the sign A in the digital map.

Similarly, the digital map generating device 720 may already have obtained position information of the sign B and have contained the position information thereof in the digital map. At this time, a sign C is disposed at a position similar to the sign B, therefore, the sign C may not be necessary in obtaining the position information of the vehicle. Accordingly, the digital map generating device 720 may not include position information of the sign C in the digital map.

Referring to FIG. 10, the vehicle may be parked at the drop-off area 1010 by the driver. Thereafter, the vehicle may be autonomously driven by the infrastructure 11 or the autonomous valet parking server to proceed to a target position P2.

When the vehicle is autonomously driven by the control of the autonomous valet parking server, the autonomous valet parking server may provide the vehicle with the guide route and instruct the vehicle to autonomously travel by itself, or may provide the vehicle with a series of control commands based on the guide route.

The autonomous valet parking server may detect a marker or a sign disposed at a position the vehicle passes by so as to figure out whether the vehicle travels along the guide route and may obtain the position information thereof. For example, upon recognizing the marker ① while controlling the autonomous driving so as to park the vehicle, the autonomous valet parking server may recognize that the vehicle performs autonomous driving after leaving the drop-off area. In addition, when the autonomous valet parking server recognizes that the markers ② and ③ are detected, the autonomous valet parking server may recognize that the vehicle proceeds along the guide route. Likewise, the autonomous valet parking server may recognize that the vehicle moves precisely along the guide route to the target position P2 as the sign B, and the markers (4) and ⑤ are recognized.

The sign information may be updated in real-time.

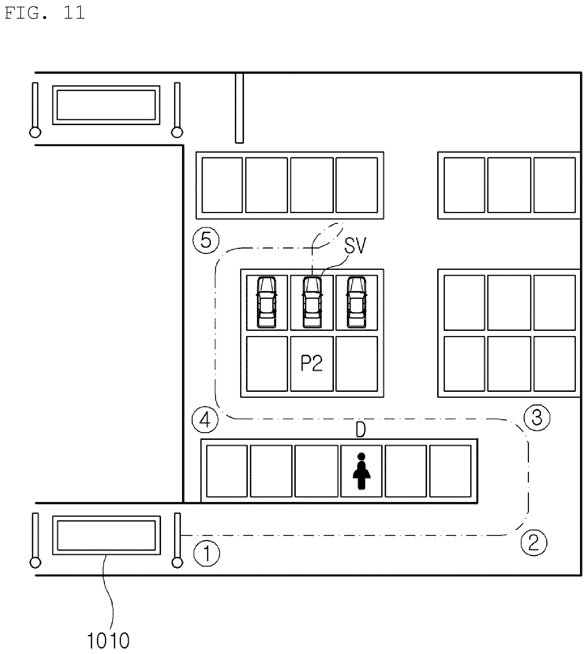

FIG. 11 is an example illustrating a case of which a sign is changed.

When comparing FIG. 10 and FIG. 11 with each other, the sign A, the sign B, and the sign C may be deleted and a sign D may be added. The autonomous driving vehicle may obtain images while traveling along the guide route for parking, and may transmit the images to the autonomous valet parking server. A server provided for the autonomous valet parking or, the digital map generating device 720 may detect that the existing signs A, B, and C disappeared and a new sign D appeared. The digital map generating device 720 may recognize that the sign A, the sign B, or the sign C is not detected from the image captured by the autonomous driving vehicle, and may determine that the signs are removed. If the corresponding signs are not detected from the images obtained from a plurality of vehicles, the digital map generating device 720 may determine that the signs are removed. As such, if determined that the signs, which are used as the markers for position detection, are removed, the digital map generating device 720 may remove the sign information and the position information which has been previously included in the digital map.

To the contrary, the digital map generating device 720 may recognize that the sign D is newly detected from the images captured by the autonomous driving vehicle, determine whether to use the new sign D as a marker for position detection, and if the new sign D is determined to be used as the marker for position detection, the sign D may be correlated with the characteristic thereof and the position information and may be stored in the digital map.

The digital map generating device 720 may update information of the markers and signs for position detection included in the existing digital map based on the image information obtained from the vehicle which travels for parking.

This may be applied in the same way for the markers. When a unique marker, a generic marker, or a sign for position detection included previously in the digital map is not detected based on the image information obtained from the vehicle traveling for parking, the digital map generating device 720 may update the digital map immediately by setting off an alarm, or reflecting that the corresponding marker or sign has disappeared.

As above-described, the present disclosure has divided markers, which are used for figuring out position information of a vehicle in a parking lot, into a unique marker and a generic marker, and has defined purposes of the unique marker and the generic marker. In addition, the present disclosure has proposed a method for using various signs which are already installed or indicated in the site, instead of using markers which requires additional manufacture and installation in the site.

In addition, when a marker is already installed in the parking lot, by additionally providing a generic marker using various signs which are present in the parking lot, it may be possible to improve preciseness in measuring position information of a vehicle.

The functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise random-access memory (RAM), read-only memory (ROM), electrically erasable programmable ROM (EEPROM), compact disc ROM (CD-ROM) or other optical disk storage, magnetic disk storage or other magnetic storage devices, or any other medium that can be used to carry or store desired program code in the form of instructions or data structures and that can be accessed by a computer.

If the one or more example embodiments are implemented in program code or code segments, it should be appreciated that a code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. Additionally, in some aspects, the steps and/or actions of a method or algorithm can reside as one or any combination or set of codes and/or instructions on a machine readable medium and/or computer readable medium, which can be incorporated into a computer program product.

For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

A vehicle may include a sensor unit configured to obtain image data around the vehicle using at least one sensor; a controller configured to control at least one function of the vehicle; a communication apparatus configured to communicate with an autonomous valet parking server; and a processor configured to control operation of the vehicle, and the processor may recognize a unique marker installed in a parking lot from the image data, set position information of a vehicle based on the recognized unique marker, recognize an anonymous marker installed in the parking lot from the image data, and correct the position information of the vehicle based on the recognized anonymous marker.

An autonomous valet parking server may include a storage unit configured to comprise digital map information; a communication apparatus configured to communicate with a vehicle; and a processor configured to, while performing autonomous valet parking with respect to the vehicle, recognize a unique marker installed in a parking lot from image data obtained from the vehicle, set position information of the vehicle based on the recognized unique marker, recognize an anonymous marker installed in the parking lot from the image data, and correct the position information of the vehicle based on the recognized anonymous marker.

A method for performing an autonomous valet parking of a vehicle may include obtaining image data around the vehicle using at least one sensor, recognizing a unique marker installed in a parking lot from the image data and setting position information of the vehicle based on the recognized unique marker, and recognizing an anonymous marker installed in the parking lot from the image data and correcting the position information of the vehicle based on the recognized anonymous marker.

It may be possible to facilitate the autonomous valet parking system to perform the autonomous valet parking easily and without any error by precisely figuring out a position of the autonomous driving vehicle within the parking lot.

What has been described above includes examples of one or more embodiments. It is, of course, not possible to describe every conceivable combination of components or methodologies for purposes of describing the aforementioned example embodiments, but one of ordinary skill in the art may recognize that many further combinations and permutations of various embodiments are possible. Accordingly, the described example embodiments are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

As used herein, the term to "infer" or "inference" refers generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Furthermore, as used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

Throughout the present disclosure, references to components, units, or modules generally refer to items that logically can be grouped together to perform a function or group of related functions. Like reference numerals are generally intended to refer to the same or similar components. Components, units, and modules may be implemented in software, hardware or a combination of software and hardware. The components, units, modules, and/or functions described above may be implemented and/or performed by one or more processors. For examples, the components, units, and/or modules may include processor(s), microprocessor(s), graphics processing unit(s), logic circuit(s), dedicated circuit(s), application-specific integrated circuit(s), programmable array logic, field-programmable gate array(s), controller(s), microcontroller(s), and/or other suitable hardware. The components, units, and/or modules may also include software control module(s) implemented with a processor or logic circuitry for example. The components, units, and/or modules may include or otherwise be able to access memory such as, for example, one or more non-transitory computer-readable storage media, such as random-access memory, read-only memory, electrically erasable programmable read-only memory, erasable programmable read-only memory, flash/other memory device(s), data registrar(s), database(s), and/or other suitable hardware. One or more storage type media may include any or all of the tangible memory of computers, processors, or the like, or associated modules thereof, such as various semiconductor memories, tape drives, disk drives and the like, which may provide non-transitory storage at any time for software programming.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, and C", "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

## Claims

1. A vehicle comprising:
at least one sensor configured to obtain image data indicating a surrounding environment of the vehicle;
a controller configured to control at least one operation of the vehicle;
a communication interface; and
at least one processor configured to:
identify, based on the image data, a unique marker installed in a parking lot;
set, based on the unique marker, position information of the vehicle;
identify, based on the image data, a generic marker installed in the parking lot;
adjust, based on the generic marker, the position information of the vehicle; and
control, based on the adjusted position information of the vehicle, an autonomous parking operation of the vehicle.

2. The vehicle of claim 1, wherein the at least one processor is configured to set the position information of the vehicle by:
receiving, from a server via the communication interface, a digital map indicating a position of the unique marker and a position of the generic marker; and
identifying a position of the vehicle based on the position of the unique marker as indicated in the digital map, and
wherein the at least one processor is configured to adjust the position information of the vehicle by:
adjusting the position of the vehicle based on the position of the generic marker as indicated in the digital map.

3. The vehicle of claim 1 or 2, wherein the at least one processor is further configured to:
reset, based on the unique marker being identified, a path, of the vehicle, to a destination.

4. The vehicle of claim 2 or 3, wherein the digital map comprises:
a first layer comprising physical three-dimensional space information,
a second layer comprising static information,
a third layer comprising temporarily static information,
a fourth layer comprising dynamic information, and
a fifth layer comprising unknown dynamic information, and
wherein the static information, of the second layer, comprises information on the unique marker and the generic marker.

5. The vehicle of anyone of claims 2-4, wherein the at least one processor is configured to identify the generic marker by:
identifying, based on the image data, a sign provided in the parking lot, wherein, optionally, the sign comprises at least one of: a signboard mandated to be installed in the parking lot, a word or a symbol provided on a ground, a guidance board, or an advertisement board, and
wherein the sign is predetermined to be used as the generic marker.

6. The vehicle of anyone of claims 2-5, wherein the digital map indicates that a characteristic and a position of a mapped sign that corresponds to the generic marker,
wherein the at least one processor is configured to adjust the position information by:
identifying, based on the image data, an observed sign in the parking lot;
determining, based on the image data, a characteristic of the observed sign;
determining, based on a comparison of the characteristic of the observed sign with the characteristic of the mapped sign, that the observed sign matches the mapped sign; and
adjust the position information of the vehicle further based on the observed sign,
wherein, optionally, the characteristic of the observed sign comprise at least one of: a type of sign, components of the sign, a color of the sign, or relative position information of the components of the sign, wherein, further optionally, the components comprise at least one of a character or a symbol, and wherein the characteristic of the observed sign comprises at least one of: character information, relative character position information, symbol information, or relative symbol position information.

7. The vehicle of anyone of claims 1-6, wherein at least one of the unique marker or the generic marker comprises at least one white rectangle disposed in a black rectangular background, and
wherein the unique marker has a greater complexity than the generic marker.

8. An autonomous parking server comprising:
data storage configured to store a digital map;
a communication interface for communication with a vehicle; and
at least one processor configured to:
receive, from the vehicle, image data indicating a surrounding environment of the vehicle;
identify, based on the image data, a unique marker installed in a parking lot;
set, based on the unique marker, position information of the vehicle;
identify, based on the image data, a generic marker installed in the parking lot;
adjust, based on the generic marker, the position information of the vehicle; and
cause, based on the adjusted position information of the vehicle, the vehicle to perform an autonomous parking operation.

9. The autonomous parking server of claim 8, wherein the at least one processor is configured to set the position information of the vehicle by:
transmitting, to the vehicle via the communication interface, the digital map, wherein the digital map indicates a position of the unique marker and a position of the generic marker; and
identifying a position of the vehicle based on the position of the unique marker as indicated in the digital map, and
wherein the at least one processor is configured to adjust the position information of the vehicle by:
adjusting the position of the vehicle based on the position of the generic marker as indicated in the digital map.

10. The autonomous parking server of claim 8 or 9, wherein the at least one processor is further configured to:
reset, based on the unique marker being identified, a path, of the vehicle, to a destination.

11. The autonomous parking server of anyone of claims 8-10, wherein the digital map comprises:
a first layer comprising physical three-dimensional space information,
a second layer comprising static information,
a third layer comprising temporarily static information,
a fourth layer comprising dynamic information, and
a fifth layer comprising unknown dynamic information, and
wherein the static information, of the second layer, comprises information on the unique marker and the generic marker.

12. The autonomous parking server of anyone of claims 8-11,
wherein the at least one processor is further configured to:
identify, based on the image data, a sign provided in the parking lot and used as the generic marker, and adjust the position information of the vehicle.

13. A method performed by an apparatus of a vehicle, the method comprising:
receiving, from at least one sensor of the vehicle, image data indicating a surrounding environment of the vehicle;
identifying, based on the image data, a unique marker installed in a parking lot;
setting, based on the unique marker, position information of the vehicle;
identifying, based on the image data, a generic marker installed in the parking lot;
adjusting, based on the generic marker, the position information of the vehicle; and
controlling, based on the adjusted position information of the vehicle, an autonomous parking operation of the vehicle.

14. The method of claim 13, wherein the setting of the position information comprises:
receiving, from a server via a communication interface of the vehicle, a digital map indicating a position of the unique marker and a position of the generic marker; and
identifying a position of the vehicle based on the position of the unique marker as indicated in the digital map, and
wherein the adjusting of the position information comprises:
adjusting the position of the vehicle based on the position of the generic marker as indicated in the digital map,
wherein, optionally, the identifying of the generic marker comprises: identifying, based on the image data, a sign provided in the parking lot, wherein, further optionally, the sign comprises at least one of: a signboard mandated to be installed in the parking lot, a word or a symbol provided on a ground, a guidance board, or an advertisement board, and wherein the sign is predetermined to be used as the generic marker.

15. The method of claim 13 or 14, further comprising:
resetting, based on the unique marker being identified, a path, of the vehicle, to a destination.
